# EUROPEAN PATENT APPLICATION

(11) **EP 2 178 227 A1**
(43) Date of publication of application: **21.04.2010**
(21) Application number: 08168016.7
(22) Date of filing: 31.10.2008
(51) Int. Cl.: H04B 10/10, H04J 14/02, G02B 23/02

(54) **Optical receiver for a WDM free space communication system**

(30) Priority: 20.10.2008 LV 080177
(71) Applicant: Latvijas Universitate, 1586 Riga (LV)
(72) Inventor: Äbele, Märis, 4101 Cesis (LV); Vjaters, Jänis, 1082 Riga (LV); Rutkovska, Elina, 1004 Riga (LV)
(74) Representative: Fortuna, Aleksandra

(57) **Abstract**

The invention concerns an optical receiver for a WDM free space optical communication system. The receiver comprises a telescopic system having a primary and a secondary mirror, a beam splitter block, a diaphragm and a spherical aberration free chromatic element placed along an optical axis of the receiver. The chromatic element is adapted to demultiplex the wavelength channels of the input optical beam, so that channels are focused at different focal planes on the optical axis of the receivers, and detectors are placed at said focal planes.

## Description

### Technical Field

The present invention relates to free space optics devices, and more specifically to optical systems for free space optics devices and wireless communication technologies.

### Background Art

Various communication systems are known for wireless data transmission through the atmosphere, including free space optics devices, in which monochrome (laser) optical transmitters are used, whose radiated light signal carrier is modulated with data and transmitted through the atmosphere to the another free space optics device light optical receiver. Optical signals transmission through the atmosphere in free space optics device is provided by device optical transmitters optical systems, forming (collimating) radiated light beams from light transmitters into the narrow light beams turned to another - these light radiation receiving free space optics device, whose receiving optical system collects (focus) light radiation into light receiver surface, what can be single mode or multi-mode fiber optic cable light input surface. The focused light is transmitted via optical fibre to the de-multiplexing element, where received light radiation is de-multiplexed (splited up) into received light wave bands. The light beam from the communication device's light radiation receiver surface (fiber optic cable input surface) in its passage through de-multiplexing process is geometrical reshaped (recolimated) and focused many times in its way through bandpass filters and de-multiplexing optical elements and received on the wave bands light detectors light radiation sensitive surfaces with significant light radiation losses and high optical noises, which brings to high BERs and limit communication distance. To decrease received light radiation losses in the free space optics communication devices the light receiver optical systems with the light detectors light radiation sensitive surfaces in the receiver wave bands in conformable focal planes are installed.

The free space optics system is known (patent US 7177550B1, publ. 13.02.2007) for simultaneous receiving of different lenght light waves signals transmitted through the atmosphere, containing at least one diffractive optical element with screened its central part, which focuses the entering light with various wave length in the various conformable focal points on the diffractive optical element optical axis, various length light waves phase compensator for light waves, befitting light waves from various zones of the diffractive optical element phases indemnification in the conformable focal points, light detectors, each placed near-by or on conformable focal point for light with the certain waves length and the focusing optical element in the entrance of each light detector, light detectors and their focusings optical elements are parallel and collinear of the optical axis of the diffractive optical element.

Significant drawbacks of the known optical system are its ability simultaneously use limited and low number of optical channels receiving transmitted optical signals, determined by the known device optical sistem's construction and this substantially decrease simultaneous data transmission volume. The construction of the known optical system (diffractive optical element with light waves phase compensator) limits maximal data streem rate to or less then 2.5 Gbps. Moreover the known free space optics communication device receiving optical system construction (diffractive optical element) provides significant optical noises in the entrances of light detectors, what diminishes data quality and communication distance.

### Disclosure of Invention

The objective of invention is to increase the amount of the simultaneously operating optical channels of the optical device, each of them working on its light wave length to increase communication device joint data transmission rate and decrease the optical noise of each optical channel at receiver side.

### Brief Description of Drawings

Description of inventions is explained by followings pictures.
Figure 1. Block diagram of the optical system.
Figure 2: Block diagram of the beamsplitter block.
Figure 3: Block diagram of the additional communication channels of the optical system.
Figure 4: The chromatic component formed with lenses.
Figure 5: The chromatic component formed with the diffractive optical element.

The free space optics communication systems are widely used for wireless data transmission through the atmosphere using monochrome optical transmitters (semiconductor lasers) radiated light beam with light carrier signal modulated with data information and transmitted through atmosphere to other device - optical light signal receiver. The radiated from laser light carrier waves are modulated with data signals say with radiation intensity, frequency or phase, light carrier waves get polarized accordingly and the light signal received at a receiver side is accordingly demodulated. In present invention the light radiation intensity is used for signal modulation.

The term "light" mentioned in description is the optical radiation, what can be either in ultraviolet, visible or infrared range of the electromagnetic waves spectrum.

The offered optical device is created as the achromatic telescopic system with the central screen of input light beam, in the output on its optical axis the block of optical beamsplitter is placed and in the focal plane of the telescopic system on its optical axis a diaphragm is placed. Behind the diaphragm on the optical axis of the telescopic system parallel and coaxial its optical axis a spherical aberration free chromatic component is placed, in whose conformable focal planes of the light radiation spectral lines on its optical axis communication optical channel with conformable spectral line communication sensor optical mating system input is placed. The offered optical system enable to unite numerous simultaneouly and independently operating optical communication channels in shared optical system with common optical axis having minimum optical noise level, as from adjacent optical channels, so from the outside radiation.

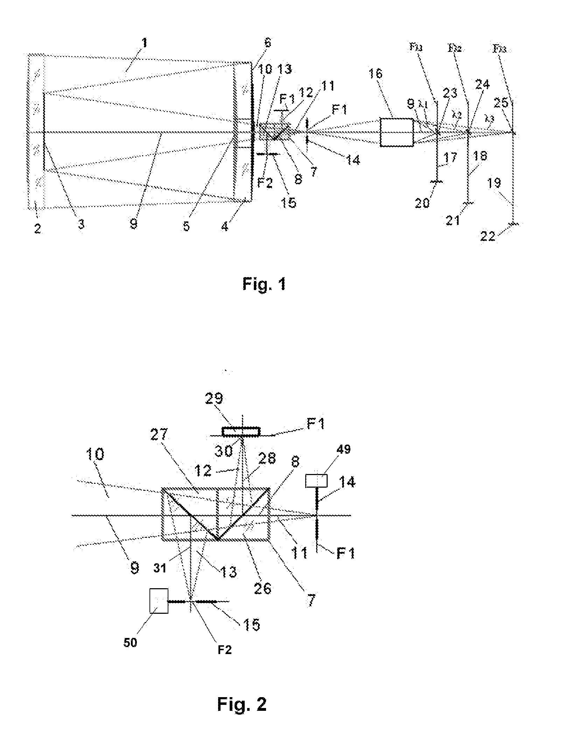

The offered optical system (Fig.1) consists of the optical system element with a central screen, focal points conformable to the wavelengths of the received light placed on the optical axis of the optical system, with parallel and coaxial placed on optical axis in conformable focal points one after another light sensor optical mating system input elements **characterized in that** optical system comprise achromatic telescopic system 1 containing convex- plano lense 2, whose flat surface central part 3 is the telescopic system secondary mirror, convex - concave lense 4 with an aperture 5 in the central part of the lense, whose backside has coating 6, what forms the primary mirror of the telescopic system 1 and light beamsplitter block 7, which is placed after the telescopic system last optic element 4 with the block symmetry axis 8 parallel and coaxial to the optical axis 9 of the telescopic system, and who divides the output light beam 10 (see also Fig.2) into passing through light beam 11 and deflected light beam 12 or beams (and 13), diaphragm 14 or diaphragms (and 15), which (14) is placed in a passing through light beam 11 on the optical axis 9 close to or on the focal plane F1 of the telescopic system, after which (F1) parallel and coaxial the telescopic system optical axis 9 a spherical aberration free chromatic component 16 is placed (Fig.1), after which on its optical axis 9 communication device's each optical channel (accordingly 17, 18, 19) with corresponding radiation spectral line (λ1, λ2, λ3) on its focal plane Fλ₁, Fλ₂, Fλ₃ the channel's with corresponding spectral line λ1, λ2, λ3 communication sensor (accordingly 20, 21, 22) optical mating system input (accordingly 23, 24, 25) is placed.

Light beamsplitter block 7 consist of one 26 (Fig.2) or a few (e.g. and 27) separate light beamsplitters, for example, a cube polarized and unpolarized beamsplitter, placed with its symmetry axis 8 parallel and coaxial to the telescopic system optical axis 9 in the outgoing light beam 10. The amount of the separate beamsplitters in the beamsplitter block 7 can be more than two.

In one deflected light beam 12 (Fig. 2) on the telescopic system focal plane F1 on the light beam optical axis 28 the video camera's say charge coupled device 29 light sensible element symmetry centre 30 is placed.

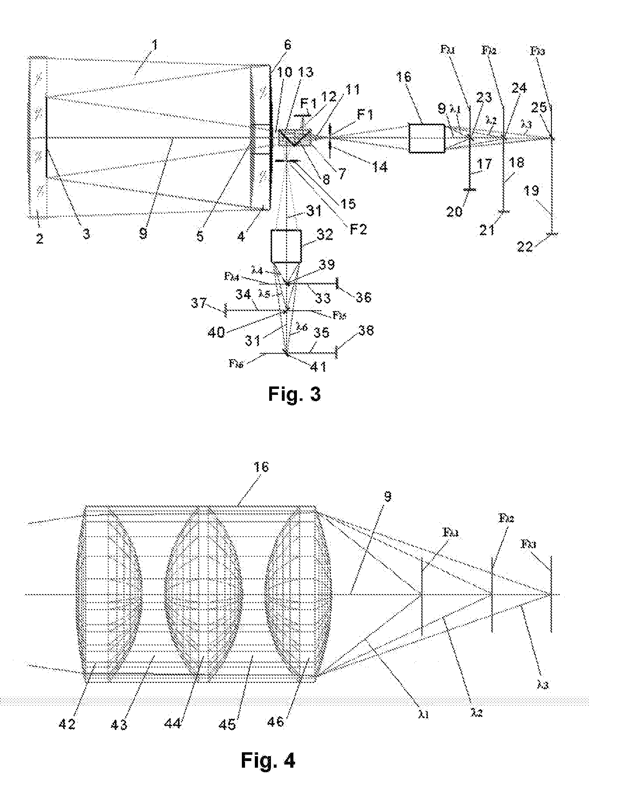

In the second deflected light beam 13 (Fig.3) on its optical axis 31 the diaphragm 15 is placed, close to or on the telescopic system focal plane F2, behind whom (F2) parallel and coaxial the optical axis 31 the spherical aberration free chromatic component 32 is placed, after which on its optical axis 31 communication device's each optical channel (accordingly 33, 34, 35) with corresponding light radiation spectral line (λ4, λ5, λ6) on its focal plane Fλ₄, Fλ₅, Fλ₆ the channel's with corresponding spectral line λ4, λ5, λ6 communication sensor (accordingly 36, 37, 38) optical mating system input (accordingly 39, 40, 41) is placed.

In the light beamsplitter block 7 in the each next placed separate light beamsplitter deflected light beam on its optical axis close to or on the telescopic system focal plane F its own diaphragm is placed, behind whom (F) parallel and coaxial its optical axis the next spherical aberration free chromatic component is placed, after which on its optical axis the communication device's each new optical channel, with corresponding light radiation spectral line on spectral line's focal plane the channel's with corresponding spectral line communication sensor optical mating system input is placed.

The chromatic component 16 (32) (Fig.4) consists of aligned to shared optical axis 9 five lenses: double-convex 42, double-concave 43, double-convex 44, double-concave 45 and double-convex 46. The chromatic component 16 (32) can contain also other lens number and their curvature directions.

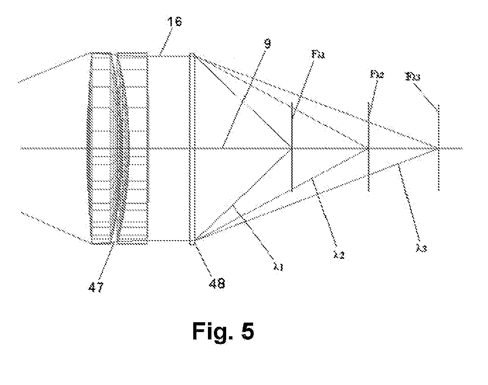

The chromatic component 16 (32) (Fig.5) can be different and consists of spherical aberration free achromatic component 47 and diffractive optical component 48 say Fresnel lense.

The diaphragm 14 (Fig.2) is placed after the light beamsplitter block 7 into through going light beam 11 on telescopic system optical axis 9 close or on the telescopic system focal plane F1 and is fixed in the diaphragm moving mechanism 49 with possible diaphragm linear motion in the optical axis 9 direction. The diaphragm 15 is placed behind the light beamsplitter block 7 in the deflected light beam 13 with his optical axis 31 close or on the telescopic system focal plane F2 and is fixed in the diaphragm moving mechanism 50 with possible diaphragm linear motion in the optical axis 31 direction.

The optical system functions in the following way. The light beam entering the telescopic system 1 (see Fig. 1) goes through telescopic system first convex-plano lens 2 and the second concave-convex lens 4, reflects from its (4) back surface coating 6, which forms the telescopic system 1 primary mirror, goes through the concave-convex lens 4 and reflects from the convex-plano lens 2 flat surface central part 3, what is the telescopic system flat secondary mirror, and goes through the aperture 5 in the lens 4 central part. Reflected from the convex-plano lens 2 flat surface central part 3 light beam 10 goes to the beamsplitter block 7, which is placed with its symmetry axis 8 parallel and coaxial the telescopic system optical axis 9, behind telescopic system last optical element 4. The light beam 10 in the beamsplitter block 7 is split into passing through light beam 11 and deflected light beam 12 in the first say polarizing cube beamsplitter 26 (see Fig. 2). The passing through light beam 11 (see Fig. 1) is focused on the telescopic system 1 focal plane F1 and passes through the diaphragm 14, which (14) is placed into the passing through light beam 11 on the telescopic system optical axis 9 close or on the telescopic system focal plane F1 and the diaphragm 14 limits the telescopic system 1 angular field of vision. The passing through light beam 11 behind the diaphragm 14 goes to parallel and coaxial the telescopic system 1 optical axis 9 placed spherical aberration free chromatic component 16, who consists of aligned to shared optical axis 9 five lenses (see Fig. 4): double-convex 42, double-concave 43, double-convex 44, double-concave 45 and double-convex 46 and in which the passing through light beam 11 is splitted (see Fig. 1) into light beam signal carrier forming spectra lines (λ1, λ2, λ3) focused on the optical axis 9 in corresponding focal planes say Fλ₁, Fλ₂, Fλ₃. In the focal planes Fλ₁, Fλ2, Fλ₃ accordingly optical channel say 17, 18, 19 communication sensor (accordingly 20, 21, 22) optical mating system input (accordingly say 23, 24, 25) is placed and to any of them conformable signal carrier forming spectra line is focused.

The amount of the optical channels are limited by the communication sensors located one after another on the chromatic component optical axis linear dimensions and the linear chromatic dispersion of the chromatic component - the ability to focus different light spectra lines on different places on the chromatic component optical axis. For example, with the communication sensor optical mating system input linear dimensions say 0.2 mm and the chromatic component linear chromatic dispersion range on its optical axis say 100 mm/µm (say in 1.0 - 1.3 µm spectra range), more then 10 optical channels can be used.

The communication sensor can be say light radiation receiver, say PIN diode, as well as the light transmitter say laser or LED, which light sensitive and or lights emitting surface is optical mated with optical channel optical mating system input.

The light receivers optical interface with the communication channel optical mating system input are sufficient mating input aperture and focused received light image areas at the chromatic component output for all light signal carrier forming spectra lines and the focused received light image area must be lesser than optical mating system input area.

The communication channel optical mating system input (output) for light transmitter (communication sensor) needs additional angular aperture mating input (output) aperture and chromatic component angular output for all signal carrier forming spectra lines.

The beamsplitter block 7 (see Fig. 2) beamsplitter 26 deflected light beam 12 focuses in telescopic system focal plane F1 on the light beam 12 optical axis 28. At this focal plane F1 the video camera matrix (charge-coupled device) 29 with light sensetive element simmetry centre 30 on the optical axis 28 is placed. Entering the telescopic system light beam angular shift and direction from the telescopic system optical axis is presented as the image shift on the video camera matrix 29 light sensetive element surface in relation to matrix light sensetive element simmetry centre 30. The light beam 12 deviation data from focused light image on the video camera matrix are used for free space optical communication device telescopic system pointing to another - transmitting free space optical communication device.

The beamsplitter block 7 another beamsplitter 27 deflected light beam 13 focuses on the telescopic system focal plane F2 on its (13) optical axis 31 where diaphragm 15 is placed close or on the telescopic system focal plane F2 (see Fig. 3), behind whom (F2) parallel and coaxial the optical axis 31 spherical aberration free chromatic component 32 is placed, after which on its optical axis 31 communication device's each optical channel (accordingly say 33, 34, 35) with corresponding radiation spectral line (say λ4, λ5, λ6) on its focal plane Fλ₄, Fλ₅, Fλ₆ the channel's with corresponding spectral line λ4, λ5, λ6 communication sensor (accordingly say 36, 37, 38) optical mating system input (accordingly say 39, 40, 41) is placed.

In the beamsplitter block 7 (see Fig. 2) can be placed following one after another beamsplitters, each able to deflect new light beam (see Fig. 3) outputed from telescopic system and focus them in their focal planes, limited with their diaphragms, which are placed close or on their focal planes, after which (focal planes) the spherical aberration free chromatic components are placed, in outputs of them light signals are formed for new communication channels.

The chromatic component 16 (32) (see Fig.5) can be different. It consists say of spherical aberration free achromatic component 47 and diffractive optical element 48 whose optical axes are parallel and coaxial telescopic system optical axis 9. The chromatic component 16 functions in the following way. Passing diaphragm 14 (see Fig.1) passing through dispersing light beam 11 (see Fig.5) goes to spherical aberration free achromatic component 47 input aperture and in the achromatic component 47 output is formed paralell light beam with screened central part (in telescopic system 1), which goes to diffractive optical element 48, say Fresnel lens, what focus light signal carrier forming spectra lines (λ1, λ2, λ3) on their focal planes Fλ₁, Fλ₂, Fλ₃, where communication sensors optical mating systems inputs are placed.

The diaphragm 14 ( and or 15) (see Fig.2) location on the optical axis 9 (and or 31) can be changed, with its displacement mechanism 49 (and or 50) accordingly altering free space optical device's communication channels angular aperture.

## Claims

1. The optical system for free space optical communication device consisting of the optical system element with a central beam screen, optical system conformable wavelengths focal points placed on the optical system optical axis, one after another following conformable wavelength light receiver optical mating system input elements placed parallel and coaxial the optical system optical axis **characterized in that** optical system contains achomatic telescopic system (1), which contains convex-plano lens (2), flat surface central part (3) of which is flat secondary mirror of the telescopic system, concave-convex lens (4) with an aperture (5) in lens central part and its convex surface coating (6) makes the telescopic system (1) primary mirror and wherein said beamsplitter block (7), placed with its symmetry axis (8) parallel and coaxial the telescopic system optical axis (9) behind said telescopic system last optical element (4), which [7] splits telescope outputed light beam (10) into light beams - passing through light beam (11) and deflected light beam (12) or said beams (and 13), diaphragm (14) or diaphragms (and 15), which (14) is placed into passing through light beam (11) on telescopic system focal plane (F1) behind which spherical aberration free chromatic component (16) is parallelly and coaxially placed on telescopic system optical axis (9), after which optical mating system input (accordingly 23, 24, 25) is placed on optical axis (9) in focal plane (Fλ₁, Fλ₂, Fλ₃) of communication device's each optical channel (17, 18, 19) with corresponding radiation spectral line (λ1, λ2, λ3).

2. The optical system as claimed in claim 1, **characterized in that** the beamsplitter block (7) consists of one (26) or several (27) separate beamsplitters.

3. The optical system as claimed in claim 2, **characterized in that** the beamsplitter block (7) contains one or several separate non-polarizing beamsplitters.

4. The optical system as claimed in claim 2, **characterized in that** the beamsplitter block (7) contains one or several separate polarizing beamsplitters.

5. The optical system as claimed in claim 1, **characterized in that** on the deflected light beam (12) on its optical axis (28) at the telescopic system focal plane (F1) is placed light sensetive elements' centre (30) of simmetry of video camera matrix (said charge-coupled device) (29).

6. The optical system as claimed in claim 1, **characterized in that** on the second deflected light beam (13) on its optical axis (31) diaphragm (15) is placed close or on the telescopic system focal plane (F2), behind which parallel and coaxial the optical axis (31) spherical aberration free chromatic component (32) is placed, after which on its optical axis (31) optical mating system input (accordingly 39, 40, 41) of communication device's each optical channel (accordingly 33, 34, 35) with corresponding radiation spectral line (λ4, λ5, λ6) on its focal plane (Fλ₄, Fλ₅, Fλ₆) the channel's with corresponding spectral line (λ4, λ5, λ6) communication sensor (accordingly 36, 37, 38) is placed

7. The optical system as claimed in claim 1, **characterized in that** in beamsplitter block (7) comprising any next separate beamsplitter for said next deflected light beam on its optical axis its diaphragm is placed close or on the telescopic system focal plane (F), which is placed in the deflected light beam on its optical axis close or on the telescopic system focal plane (F), behind which its spherical aberration free chromatic component is placed on optical axis, after which its optical mating system input of communication device's each optical channel with corresponding radiation spectral line on its focal plane the channel's with it corresponding spectral line communication sensor is placed.

8. The optical system as claimed in claim 1, **characterized in that** spherical aberration free chromatic component (16) consists of five lenses aligned to shared optical axis (9): double-convex (42), double-concave (43), double-convex (44), double-concave (45) and double-convex (46).

9. The optical system as claimed in claim 8, **characterized in that** spherical aberration free chromatic component (16) consists of spherical aberration free achromatic component (47) and diffractive optical component (48).

10. The optical system as claimed in claim 1, **characterized in that** diaphragm (14) and/or (15) is fixed in a diaphragm moving mechanism (49) and /or (50).
